# EUROPÄISCHE PATENTSCHRIFT

(11) **EP 1 050 282 B1**
(45) Veröffentlichungstag und Bekanntmachung des Hinweises auf die Patenterteilung: **07.03.2007**
(21) Anmeldenummer: 99250289.8
(22) Anmeldetag: 25.08.1999
(51) Int. Cl.: A61C 8/00

(54) **Kieferimplantat**
Dental implant
Implant dentaire

(30) Priorität: 04.05.1999 DE 29908207 U
(43) Veröffentlichungstag der Anmeldung: 08.11.2000
(73) Patentinhaber: Biomed Est., 9490 Vaduz (LI)
(72) Erfinder: Ihde, Stefan, Dr., 8738 Uetliburg (CH)
(74) Vertreter: Radwer, Dieter

(56) Entgegenhaltungen:
- DE-A- 3 018 255
- DE-U- 29 820 487
- FR-A- 2 302 715
- US-A- 5 344 457

## Beschreibung

Die Erfindung betrifft ein basalosseointegrierbares Kieferimplantat zur Aufnahme und Befestigung einer Krone, einer Prothese, eines Steges oder einer Brükke.

Basale, laterale Kieferimplantate, die in ein auf chirurgische Weise im Ober- oder Unterkiefer herstelltes Implantatbett eingesetzt werden und nach dem Einheilen zur Befestigung einer Krone, künstlicher Zähne oder einer zahnprothetischen Konstruktion dienen, sind bereits in den vielfältigsten Ausführungsformen bekannt. Diese Kieferimplantate bestehen im wesentlichen aus einem ring- oder scheibenförmigen Fußteil, der über einen Steg mit einem orthogonal zum Fußteil orientierten Schaft verbunden ist. Der Schaft weist an seinem freien Ende ein Gewinde zur Befestigung eines Abutments auf oder dient selbst als Pfosten für die Zementierung einer Krone oder einer Brücke.

Bekannt sind ferner sogenannte Doppelscheibenimplantate, deren Fußteil durch mehrere untereinander angeordnete und voneinander beabstandete Scheiben oder Ringe gebildet werden, die durch einen inneren oder durch den orthogonal zum Fußteil orientierten Schaft miteinander verbunden sind. Die bekannten Lösungen können in Kieferimplantate mit einer einteiligen oder mehrteiligen Ausführung unterteilt werden - FR 2 302 715, EP 0 214 962, DE 298 12 642.

Trotz der guten Erfolge, die mit den bisher bekannten Kieferimplantaten, bei denen der Schaft axial zur Ebene der Mittelachse der Implantatbasis angeordnet ist, erzielt worden sind, zeigt sich, daß mit der Ausbildung des Implantatbettes und dem Einsetzen des Implantates in die auf chirurgische Weise herstellte Öffnung eine weitgehende exakte Anpassung an die natürliche, verschiedenartige Anatomie der Ober- oder Unterkiefer nur sehr schwer möglich ist und eventuelle Nachbesserungen der Positionierung des Implantates und notwendige Anpassungen durch Biegen des Steges nach dem Einwachsen des Implantats in den Kieferknochen vorgenommen werden müssen, was naturgemäß nur begrenzt durchführbar und mit der Gefahr des Lockerns des Kieferimplantates im Ober- oder Unterkiefer verbunden ist.

Aus FR 2 302 715, EP 0 388 576, US 5 344 457 und EP 0 214 962 ist ferner bekannt, die Oberfläche des Fußteiles des Implantats und den Übergangsbereich des Schaftes zum Steg, den sogenannten Schafthals durch Strahl-, Ätz- oder kombinierte Verfahren zu vergrößern oder den Übergangsbereich mit einer Profilierung oder einer gesonderten Struktur zu versehen, um den sicheren Sitz des Implantats im Kieferknochen zu unterstützen. In der Praxis hat sich jedoch gezeigt, daß durch die Strukturen und die Oberflächenvergrößerungen in diesem Übergangsbereich Reizungen und Entzündungen des im Prozeß der Einheilung entstandenen Bindegewebes hervorrufen können und zudem die Oberflächenvergrößerungen zu einer Ansammlung von Bakterien führt, die den Einheilungsprozeß und einen dauerhaften, festen Sitz des Kieferimplantats im Ober- oder Unterkiefer nachteilig beeinflussen.

Mit dem Ziel, ein basalosseointegrierbares Implantat an den besonderen Aufbau bestimmter Bereiche anzupassen, um seine Anwendung als künstliche Wurzel zu erleichtern und seine Leistungsfähigkeit zu verbessern, ist aus DE 3 018 255 A1 eine Lösung bekannt, bei der die Basis des Implantates asymetrisch zum Schaft angeordnet ist. Die Basisflächen, die sich beiderseits des Schaftes erstrecken, sind gleich groß, besitzen jedoch eine verschiedene Konfiguration. Das Implantat nach DE 3 018 255 A1 weist eine starre und kompakte Implantatbasis auf und entspricht in seiner Grundform, mit Ausnahme der asymetrischen Anordnung des Schaftes, den bisher bekannten basalosseointegriebaren Implantaten.

Wesentliche Nachteile dieser vorgeschlagenen Lösung haben ihre Ursachen in der sehr starren und kompakten Ausbildung der Implantatbasis und der unreichenden Anpassung der Konfiguration des Basis an das durch Fräsungen hergestellte Implantatbett. Durch diese Faktoren wird die für die Bildung neuer Knochensubstanz dringend notwendige Blut- und Nährstoffversorgung in einem stärkeren Maße als erforderlich unterbrochen und der Einheilungsprozeß in unnötiger Weise verlängert. Die praktischen Erfahrungen mit den bisher bekannten Implantaten haben ferner gezeigt, daß die starre und kompakte Implantatbasis für das sichere Eintragen der Kräfte in den Kieferknochen die Ursache dafür ist, daß sich das Implantat bei relativ hohen Kraftspitzen lockert und eine erneute zahnärtzliche Versorgung notwendig wird. Ein dauerhafter, fester Sitz des Implantates kann somit nicht sicher sicher gewährleistet werden.

Der Erfindung liegt daher die Aufgabe zugrunde, durch eine geeignete Gestaltung der Implantatbasis weitergehende Möglichkeiten der Anpassung des Implantats an die verschiedenartige, natürliche Anatomie in der Ausbildung des Ober- und Unterkiefers zu schaffen und das komplikationsfreie Einwachsen des Implantats in den Kieferknochen, verbunden mit einem festen und dauerhaften Sitz weiter zu verbessern.

Erfindungsgemäß wird die Aufgabe durch die im Anspruch 1 angegebenen Merkmale gelöst. Weitere vorteilhafte Ausbildungen der Erfindung ergeben sich aus den Unteransprüchen 2 bis 6.

Das einstückige basalosseointegrierbare Kieferimplantat nach der Erfindung besitzt eine weiter verbesserte, ringartige Implantatbasis, die eine, an das durch Fräsen herstellte Implantatbett angepaßte halbrunde Seite und eine rechteckförmige/quadratische Seite aufweist, wobei die Grundflächen auf der halbrunden Seite und auf der rechteckförmigen/quadratischen Seite unterschiedlich sind und der Schaft etwa mittig im Zentrum der halbrunden Seite angeordnet ist. Die Implantatbasis, der Steg und wahlweise der Übergangsbereich des Schaftes zum Steg ist in an sich bekannter Weise mit einer durch Strahl-, Ätz- oder kombinierte Verfahren hergestellte Oberflächenvergrößerung versehen, während der Schaft in seinem Kopfbereich unterhalb des Gewindes eine glatte, nicht strukturierte Oberfläche aufweist.

Mit den unterschiedlich konfigurierten Seiten der Implantatbasis ist eine exakte Anpassung der Implantatbasis an die durch Fräsen hergestellte Öffnung im Ober- oder Unterkiefer gewährleistet. Die äußere Konfiguration der Implantatbasis ist so auf das durch Fräsungen hergestellte Implantatbett abgestimmt, daß das Implantat in unmittelbarem Kontakt zur Knochensubsanz mit geringen Preß- und/oder Druckkräften in den Kieferknochen resp. in das Implantatbett eingesetzt wird. Die für die Bildung von neuer Knochensubstanz und für die Verkürzung der Einheilzeit so dringend notwendige geringstmögliche Unterbrechung der Blutbahnen für eine gute Blut- und Nährstoffversorgung bleibt so auf ein Mindestmaß beschränkt.

Die verbesserte Blut- und Nährstoffversorgung fördert aber nicht nur das Wachstum an neuer Knochensubstanz bei Verringerung der Einheilzeiten sonder löst gleichzeitig einen weiteren Reinigungsprozeß aus, der das enstehenden von Entzündungen erschwert und die Möglichkeit bietet, auch an entzündlichen Stelle Implantate zu setzen.

In einer weiteren Ausführungsform besteht die erfindungsgemäße Implantatbasis aus zwei ineinander übergehende Scheibenringe, wobei der endseitig mit einem Gewinde, beispielsweise zur Befestigung eines Abutements, versehene Schaft über einen Steg im Zentrum eines der Scheibenringe asymetrisch zur Implantatbasis angeordnet ist. Anstelle eines durchgehenden Steges kann auch ein einseitiger Steg vorgesehen sein, der in der vorbeschriebenen Weise einseitig an die Innenwandung eines der Scheibenringe angelenkt ist.

Die Scheibenringe der Implantatbasis können voneinander abweichende Durchmesser und unterschiedliche Grundflächen aufweisen oder eine eliptische Form, mit gleichen oder voneinander abweichenden Durchmessern und unterschiedlichen Grundflächen haben.

Für besondere Anwendungsfälle, beispielweise bei einer für Implantationen weniger günstigen Knochensubstanz, kann die Implantatbasis aus mehreren untereinander angeordneten Basisscheiben bestehen, die durch einen inneren orthogonalen Schaft miteinander verbunden sind

Wie bereits vorstehend ausgeführt, ist die Implantatbasis, der Steg und wahlweise der Übergangsbereich des Schaftes zum Steg mit einer an sich bekannten Oberflächenvergrößerung versehen, während der Schaft in seinem Kopfbereich eine glatte, nicht strukturierte Oberfläche aufweist. Diese Ausführung ist insofern zwingend notwendig, um Entzündungen sicher auszuschließen, die infolge der Ausbildung der Implantatbasis und des Einfederns des Schaftes in die Spongiosa des Kieferknochen durch Reibkontakte des Bindegewebes an Oberflächenvergrößerungen in diesen Bereichen hervorgerufen werden und die letztlich einen dauerhaften festen des Implantates gefährden.

Mit einem Implantat nach dem zweiten Alternativlösung des Anspruchs 1 können die auftretenden Kräfte auch weiter ab vom Schaft zur Aufnahme und Befestigung der prothetischen Überkonstruktion in den Ober- oder Unterkiefer übertragen werden. Beim chirurgischen Einbringen des Implantats kann der Schaft an die prothetisch gewünschte Stelle gesetzt werden, wobei zur Kraftübertragung auch solches Knochenangebot genutzt werden kann, welches vom Schaft weiter entfernt liegt. Besonders vorteilhaft ist der Einsatz des Implantattyps nach dem zweiten Alternativlösung des Anspruchs 1 2 im Bereich der oberen ersten und zweiten Molaren, da zumeist distal von dieser Kieferregion noch ausreichend Tuberknochen vorliegt, obgleich dort keine Zähne benötigt werden. Gegenüber den an den Seiten ebenen Formen der Implantatbasis nach dem ersten Alternativlösung des Anspruchs 1 besitzen die Implantate, deren Implantatbasis aus zwei ineinander übergehenden Scheibenringen gebildet werden, eine vereinfachte Einbringungsmöglichkeit. Zur Herstellung des Implantatbettes muß nur mit dem jeweils größengleichen Fräser ein runder Schlitz mit kortikaler Verankerung gefräst werden, wobei die Fräsung vorteilhaft von einer einzigen Stelle ausgeht und dann, je nach der gewünschten Scheibengröße, in die unterschiedlichen Richtungen, jeweils auf die Mittelpunkte der Scheibenringe bezogen, fortgeführt wird und sogar in horizontaler Richtung gegeneinander abgewinkelt werden kann. In das durch Kortikalispenetration hergestellte Implantatbett wird das Implantat nach dem zweiten Alternativlösung des Anspruchs 1 mit der schaftfreien Seite der Implanatbasis zuerst eingebracht und dann in die richtige Position gedreht.

Durch die asymetrische Anordnung von Steg und Schaft zur Implantatbasis und die vorgeschlagene Konfiguration der Implantatbasis werden die Voraussetzungen dafür geschaffen, daß eine leichte und weitgehende Anpassung des Implantats an die verschiedenartige natürliche Anatomie der Ober- und Unterkiefer bereits im Prozeß des chirurgischen Eingriffes vorgenommen und in Abhängigkeit von der Ausbildung des Kieferknochenkammmes in der Mehrzahl der Anwendungen nur mit einer Fräsrichtung gearbeitet werden kann. Gegenfräsungen zur Ausbildung des Implantatbettes, wie sie bei Verwendung von Implantaten mit zentrischer Anordnung von Schaft und Fußteil oftmals erforderlich waren, bleiben auf Ausnahmefälle beschränkt. Die Ausbildung des basalosseointegrierbaren Kiefenrimplantates nach der Erfindung führt gleichzeitig zu einer wesentlichen Verkürzung der Fräszeiten für das Implantatbett.

Nachträgliche, nach dem Einwachsen des Implantats in den Ober- oder Unterkiefer vorzunehmende Anpassungen und Korrekturen, beispielweise durch Biegen des Schaftes, die naturgemäß mit einer Gefahr der Lockerung des Implantates im Kieferknochen verbunden sind, können dadurch vermieden werden.

Während die Oberflächenvergrößerung der Implantatbasis, des Steges und gegebenenfalls des Übergangsbereiches und die erfindungsgemäße Ausbildung der Implantatbasis ein schnelles Einwachsen des Implantats und seinen festen Sitz im Ober- oder Unterkiefer unterstützen, verhindert der von Oberflächenvergrößerungen und Strukturierungen freie Schaft im gewindenahen Kopfbereich die Anbindung von Bindegeweben, wobei sich ein vom natürlichen Speichel gespülter Mikrospalt ausbilden kann, der das Entstehen von Bindegewebe fördert, Reizungen und Entzündungen von Bindegewebe in diesem Bereich verhindert und dadurch den festen und sicheren Sitz des Implantats im Ober- oder Unterkiefer ebenfalls unterstützt. Denn es hat sich gezeigt, daß bei flexiblen Implantatsystemen, d.h. bei Konstruktionen im Unterkiefer oder bei Oberkieferarbeiten mit wenigen Implantaten, sich öfters Reizungen am strukturierten Schaft bildeten, die dann Knochenauflösungen zur Folge haben können.

Durch den sich im Übergangsbereich ausbildenden Mikrospalt hat der Schaft und der Steg des in die Kompakta des Kieferknochen fest eingebundene Implantatbasis bei Beaufschlagung mit größeren Kräften ferner die Möglichkeit in die Spongiosa des Kieferknochens einzufedern. Ein dauerhafter und fester Sitz des Kieferimplantates im Ober- oder Unterkiefer wird dadurch ebenfalls gesichert, wobei die Kraftübertragung stets in die Kompakta erfogt.

Vorteilhafterweise beträgt die Höhe des von Oberflächenvergrößerungen freien glatten Teils des Schaftes mindestens die Hälfte der Höhe des Schaftes bis zum Gewinde zur Befestigung eines Abutments oder dergleichen, während das Verhältnis zwischen der Höhe des Schaftes und der Höhe des Fußkörpers 1 : 6 bis 1 : 30 beträgt. Auf diese Weise kann sich, fernab von der Region des bakteriellen Angriffes, eine gute Osseointegration des basalen Schaftanteiles ausbilden.

Insgesamt wird durch die Erfindung ein schnelles, komplikationsgemindertes Einheilen des Implantats in den Ober- oder Unterkiefer unterstützt und ein dauerhaft sicherer und fester Sitz erzielt.

Die Erfindung soll nachstehend an einem Ausführungsbeispiel näher erläutert werden. In der dazugehörigen Zeichnung zeigen:
- Fig. 1 -: die Draufsicht auf das erfindungsgemäße Implantat
- Fig. 2 -: ein Implantat nach der Erfindung mit einem aus Scheibenringen gebildeten Fußteil
- Fig. 3 -: den Schnitt A - A aus Fig. 1
- Fig. 4 -: die schematische Darstellung eines in einem Unterkiefer eingesetzten Implantats entsprechend Fig. 1
- Fig. 5 -: die Draufsicht auf einen Abschnitt des Unterkiefers mit dem Implantatbett zur Aufnahme eines Implantates entsprechend Fig. 2 in schematischer Darstellung
- Fig. 6 -: das in das Implantatbett nach Fig. 5 eingesetzte Implantat gemäß Fig. 2

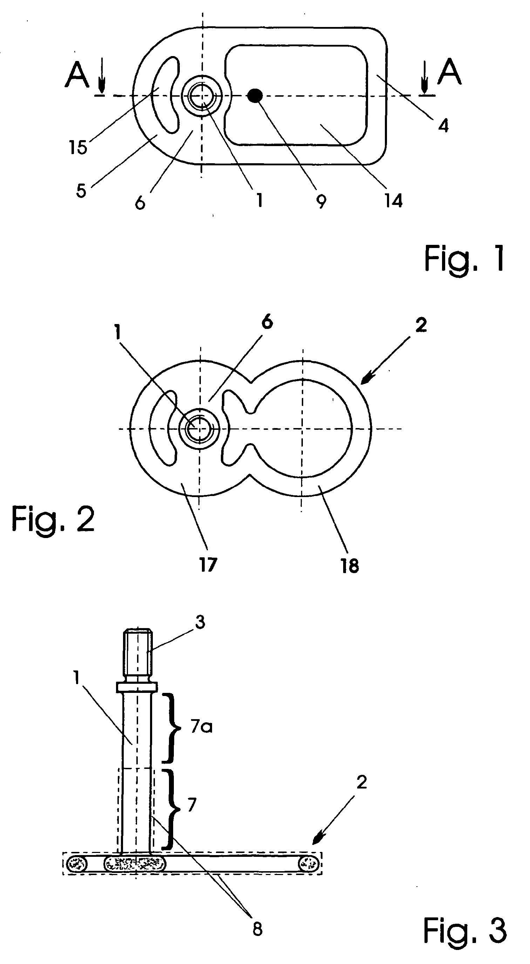

Wie aus Fig. 1 bis Fig. 3 hervorgeht, besteht das erfindungsgemäße Implantat, das in ein auf chirurgische Weise im Ober- oder Unterkiefer hergestelltes Implantatbett eingesetzt wird, aus der Implantatbasis 2 und einem an die Implantatbasis 2 über einen Steg 6 angelenkten Schaft 1. Der Schaft 1 ist orthogonal zur Implantatbasis 2 ausgerichtet und besitzt an seinem freien Stirnende ein Gewinde 3, das beispielsweise zur Aufnahme eines Abutments dient.

Die erfindungsgemäß ausgebildete, lasteintragende Implantatbasis 2 besitzt eine halbrunde Basisseite 5 und eine rechteckige oder quadratische Seite 4 mit abgerundten Ecken, wobei die Grundflächen der Basisseiten 4; 5 unterschiedlich sind.

Etwa mittig im Zentrum der halbrunden Basisseite 5 ist ein durchgehender, den Schaft 1 tragender Steg 6 in der Weise angeordnet, daß der Schaft 1 asymetrisch zur Implantatbasis 2 positioniert ist.

Die erfindungsgemäße Konfiguration der Implantatbasis 2 und die asymetrische Positionierung des Schaftes 1 zur Implantatbasis 2 ermöglichen eine weitgehende Anpassung des Kieferimplantats an die nicht einheitliche, natürliche Anatomie der Ober- und Unterkiefer und an das durch chirurgischen Eingriff mit Hilfe eines Fräsers hergestellte Implantatbett.

Die Implantatbasis 2 des Kieferimplantats weist ferner zwei Aussparungen 14; 15 auf, die in der Weise angeordnet sind, daß mit Ausnahme auf den Randbereich des Steges 6 eine ringartige Ausbildung der Implantatbasis 2 entsteht. Nach dem Einsetzen des Kieferimplantats in das Implantbett ist der ringförmige Teil der Implantatbasis 2, wie aus Fig. 3 ersichtlich, weitgehend in der Kompakta 12 des Ober- und/oder Unterkiefers positioniert und sichert auf diese Weise einen festeren Sitz des Kieferimplantats 10 im Kieferknochen 11. Der Einheilungsprozeß des eingesetzten Kieferimplantats und die Blutversorgung des kieferkammnahen Knochenabschnittes werden ferner durch die Aussparungen 14; 15 und durch eine Oberflächenvergrößerung 8 der Oberfläche der Implantatbasis 2 und des Steges 6 erleichtert und unterstützt.

Eine vorteilhafte Ausführung des Kieferimplantats nach der Erfindung ist in Fig. 2 dargestellt. Die Implantatbasis 2 des Implantates besteht aus zwei ineinander übergehenden Scheibenringen 17; 18, die gleiche oder unterschiedliche Durchmesser, mit voneinander abweichenden Grundflächen, besitzen und/oder eine Kreisform oder elliptischen Form haben können. Asymetrisch zur Implamtatbasis 2 ist im Zentrum einer der beiden Scheibenringe 17; 18 über einen Steg 6 der Schaft 1 angeordnet. Der Schaft 1 trägt endseitig in an sich bekannter Weise ein Gewinde 3 zur Befestigung eines Abutments oder zur direkten Befestigung einer prothetischen Konstruktion.

Anstelle des in Fig. 2 gezeigten durchgehenden Steges 6 kann der Schaft 1 auch über einen einseitig ausgebildeten Steg mit der Implantatbasis 2 fest verbunden sein, der wiederum asymetrisch an die Innenwandung einer der Scheibenringe 17; 18 angelenkt ist.

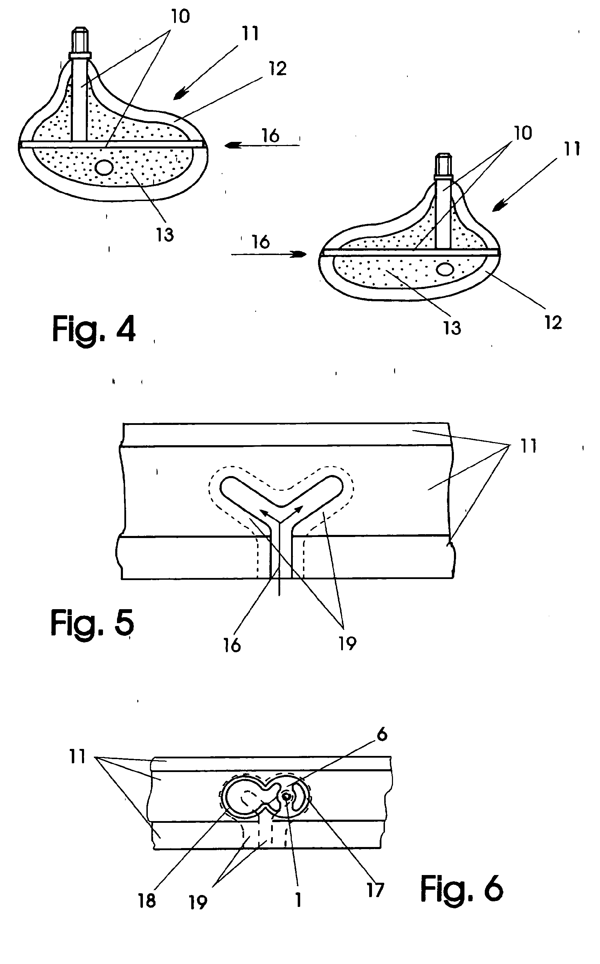

Zur Aufnahme des Implantates nach Fig. 2 wird in den Ober- oder Unterkiefer durch Kortikalispenetration ein Implantatbett 19 - Fig. 5 - gefräst und in das so hergestellte Implantatbett 19 das Implantat mit dem schaftfreien Scheibenring 18 zuerst eingesetzt und dann in seine bestimmungsgemäße Position -Fig. 6 gedreht.

Abweichend von den bisher bekannten Kieferimplantaten, bei denen der Schaft 1 eine Profilierung oder eine Oberflächenvergrößerung aufweist, besitzen die in Fig. 1 und 2 gezeigten erfindungsgemäßen Kieferimplantate im gewindenahen Kopfbereich 7a eine strukturfreie, glatte Oberfläche während der Übergangsbereich 7 des Schaftes 1 zum Steg 6 wahlweise mit einer Oberflächenverprößerung 8 versehen sein kann. Durch die glatte Oberflächenbeschaffenheit des Kopfbereiches 7a wird das Einwachsen von Bindegewebe erschwert und Bindegewebereizungen und -entzündungen, die bei profilierten und oberflächenvergrößerten Schaftabschnitten oftmals anzutreffen sind, vermieden.

Gleichzeitig kann der Schaft 1 und der Steg 6 bei größeren Belastungen in die Spongiosa 13 des Kieferknochens 11 minimal einfedern, wodurch sich im Übergangsbereich 7 eine elastische Knochendeformierung ausbildet. Durch die glatte Schaftausbildung werden für den Fall des minimalen Einfederns des Kieferimplantates in die Spongiosa des Kieferknochens Bindegewebereizungen und -entzündungen ausgeschlossen und ein dauerhaft sicherer und komplikationsfreier fester Sitz der Implantatbasis 2 in der Kompakta des Ober- oder Unterkiefers gewährleistet.

### Bezugszeichenaufstellung

- 1: Schaft
- 2: Implantatbasis
- 3: Gewinde
- 4: rechteckförmiger/quadratischer Formabschnitt
- 5: kreisförmiger/elliptischer Formabschnitt
- 6: Steg
- 7: Übergangsbereich
- 7a: Kopfbereich
- 8: Oberflächenvergrößerung
- 9: Schwerpunkt der Implantatbasis
- 10: Kieferimplantat
- 11: Kieferknochen
- 12: Kompakta
- 13: Spongiosa
- 14: Aussparung
- 15: Aussparung
- 16: Fräsrichtung
- 17: Scheibenring
- 18: Scheibenring
- 19: Implantatbett

## Patentansprüche

1. Kieferimplantat zur Aufnahme und Befestigung von künstlichen Zähnen oder einer prothetischen Überkonstruktion, bestehend aus einer scheibenförmigen, asymmetrisch zum Schaft (1) ausgebildeten Implantatbasis (2), der basal in den Ober- oder Unterkiefer eingesetzt wird, und einem orthogonal zur Implantatbasis (2) ausgerichteten Schaft (1) besitzt, der endseitig ein Gewinde (3) zur Befestigung eines Abutments trägt, wobei der Schaft (1) über einen exentrisch zum Schwerpunkt der Implantatbasis (2) angeordneten Steg (6) mit der Implantatbasis (2) zu einem einstückig ausgebildeten Kieferimplantat (10) verbunden ist und die Oberflächen des Implantates in an sich bekannter Weise mit einer Oberflächenvergrößerung versehen sind, **dadurch gekennzeichnet, dass** die Implantatbasis (2) ringartig ausgebildet ist und entweder dass die Implantatbasis eine halbrunde Seite (5) und eine rechteckförmige Seite (4) aufweist, wobei die Grundflächen auf der halbrunden Seite und auf der rechteckförmigen Seite der Implantatbasis (2) unterschiedlich sind und der Schaft (1) etwa mittig im Zentrum der halbrunden Seite (5) angeordnet ist oder dass die Implantatbasis aus zwei ineinander übergehenden Scheibenringen (17; 18) besteht, wobei der Schaft (1) asymmetrisch zum Implantatbasis (2) im Zentrum eines der Scheibenringe (17; 18) angeordnet ist; während die Implantatbasis (2), der Steg (6) und wahlweise der Übergangsbereich (7) des Schaftes (1) zum Steg (6) mit einer Oberflächenvergrößerung (8) versehen ist und der Schaft (1) im Kopfbereich (7a) eine glatte, nicht strukturierte Oberfläche besitzt.

2. Kieferimplantat nach Anspruch 1, **dadurch gekennzeichnet, dass** die Scheibenringe (17; 18) voneinander abweichende Durchmesser und unterschiedliche Grundflächen besitzen.

3. Kieferimplantat nach Anspruch 1, **dadurch gekennzeichnet, dass** die Scheibenringe (17; 18) eine elliptische Körperformbesitzen, die gleiche oder voneinander abweichenden Durchmessern und unterschiedlichen Grundflächen aufweisen.

4. Kieferimplantat nach Anspruch 1, **dadurch gekennzeichnet, dass** die Implantatbasis (2) durch mehrere untereinander angeordnete und voneinander beabstandete Basisscheiben gebildet wird, die durch einen inneren orthogonal ausgerichteten Schaft miteinander verbunden sind.

5. Kieferimplantat nach Anspruch 4, **dadurch gekennzeichnet, dass** die Oberflächen der untereinander angeordneten Basisscheiben und die des inneren Schaftes durch Strahl-, Ätz- oder kombinierte Strahl-/Ätzverfahren etc. vergrößert sind.

6. Kieferimplantat nach einem der Ansprüche 1 bis 4, **dadurch gekennzeichnet, dass** das Verhältnis zwischen der Höhe des Schaftes (1) und der Höhe des ersten Implantatbasis (2) 1 : 6 bis 1 : 30 beträgt und mindestens die Hälfte der Höhe des Schaftes (1) bis zum Gewinde (3) keine Oberflächenvergrößerung (8) aufweist und eine glatte Oberflächenbeschaffenheit besitzt.

## Claims

1. Jaw implant to accept and mount artificial teeth, or a prosthetic superstructure, comprising a disk-shaped implant base (2) made asymmetric to the shaft (1), which is inserted basally into the upper or lower jaw, and which has a shaft (1) directed orthogonally with respect to the implant base (2), having a thread (3) at the end for fastening an abutment, in which the shaft (1) is connected through a pin (6) eccentric to the centre of pressure of the implant base (2) to a jaw implant (10) made in one piece, and the surfaces of the implant are provided with a surface enlargement which is itself known, **characterised in that** the implant base (2) is made like a ring, and that the implant base (2) either has a half-round side (5) and a rectangular side (4), with the base areas on the half-round side and on the rectangular side of the implant base (2) being different, with the shaft placed approximately in the centre of the half-round side, or that the implant base (2) consists of two ring-shaped discs (17, 18) interpenetrating in the shape of a figure eight and the shaft (1) is arranged asymmetrically with respect to the foot part (2) in the centre of one of the ring-shaped discs (17, 18), and the implant base (2), the pin (6), and, optionally, the transition region (7) from the shaft (1) to the pin (6) is provided with a surface enlargement (8) and the shaft (1) has a smooth non-structured surface in the head region (7a).

2. Jaw implant according to Claim 1, **characterised in that** the ring-shaped discs (17, 18) have different diameters and different base areas.

3. Jaw implant according to Claim 1, **characterised in that** the ring-shaped discs (17, 18) have an elliptical shape, have the same or different diameters, and different base areas.

4. Jaw implant according to Claim 1, **characterised in that** the implant base is made up of several base discs that are stacked and are separated from each other, linked together by means of an internal shaft directed orthogonally.

5. Jaw implant according to Claim 4, **characterised in that** the areas of the stacked base discs and of the internal shaft are enlarged by blasting, etching, or combined blasting/etching processes.

6. Jaw implant according to one of Claims 1 to 5, **characterised in that** the ratio between the height of the shaft (1) and the height of the first implant base (2) is from 1 : 6 to 1 : 30, and that at least half the height of the shaft (1) has no surface enlargement up to the thread (3) and has a smooth surface quality.

## Revendications

1. Implant dentaire destiné à recevoir et fixer des dents artificielles ou une superstructure prothétique, composé d'une base d'implant (2) en forme de disque, asymétrique par rapport au corps (1), qui est introduite au niveau basal dans le maxillaire ou la mandibule, et d'un corps (1) perpendiculaire à la base d'implant (2), qui porte à son extrémité un filetage (3) pour la fixation d'une butée, le corps (1) étant relié à la partie de pied (2) par une tige (6) excentrée par rapport au centre de gravité de la base d'implant (2) pour former un implant dentaire (10) d'un seul tenant, et les surfaces de l'implant étant dotées de manière connue en soi d'une augmentation de la surface, **caractérisé en ce que** la base d'implant (2) est de forme annulaire et soit **en ce que** la base d'implant (2) possède un côté semi-circulaire (5) et un côté rectangulaire (4), les surfaces de base du côté semi-circulaire et du côté rectangulaire de la base d'implant (2) étant différentes et le corps (1) étant disposé à peu près au milieu au centre du côté semi-circulaire (5), soit **en ce que** la base d'implant (2) se compose de deux disques annulaires (17 ; 18) faisant suite l'un à l'autre et le corps (1) est disposé de façon asymétrique par rapport à la partie de pied (2) au centre de l'un des disques annulaires (17 ; 18) et la base d'implant (2), la tige (6) et optionnellement la partie de transition (7) du corps (1) vers la tige (6) sont dotées d'une augmentation de la surface (8) et le corps (1) possède dans la partie de tête (7a) une surface lisse et non structurée.

2. Implant dentaire selon la revendication 1, **caractérisé en ce que** les disques annulaires (17 ; 18) ont un diamètre différent l'un de l'autre et des surfaces de base différentes.

3. Implant dentaire selon la revendication 1, **caractérisé en ce que** les disques annulaires (17 ; 18) ont une forme elliptique et ont le même diamètre ou des diamètres différents et des surfaces de base différentes.

4. Implant dentaire selon la revendication 1, **caractérisé en ce que** la base d'implant (2) est formée par plusieurs disques de base disposés les uns en dessous des autres et espacés les uns des autres, qui sont reliés entre eux par un corps intérieur perpendiculaire.

5. Implant dentaire selon la revendication 4, **caractérisé en ce que** les surfaces des disques de base disposés les uns en dessous des autres et celles du corps intérieur sont augmentées par sablage, attaque chimique ou par un procédé combiné de sablage et d'attaque chimique ou autre.

6. Implant dentaire selon l'une des revendications 1 à 5, **caractérisé en ce que** le rapport entre la hauteur du corps (1) et la hauteur de la première base d'implant (2) est de 1 pour 6 à 1 pour 30 et la moitié au moins de la hauteur du corps (1), jusqu'au filetage (3), ne présente pas d'augmentation de la surface (8) et possède une structure de surface lisse.
